# EUROPÄISCHE PATENTSCHRIFT

(11) **EP 2 048 355 B1**
(45) Veröffentlichungstag und Bekanntmachung des Hinweises auf die Patenterteilung: **15.11.2017**
(21) Anmeldenummer: 08017114.3
(22) Anmeldetag: 29.09.2008
(51) Int. Cl.: F02N 11/08

(54) **Verfahren zur Steuerung eines Start-Stopp-Systems für ein Fahrzeug mit Handschaltgetriebe und Vorrichtung hierzu**
Method for controlling a start-stop system for a vehicle with manual transmission and corresponding device
Procédé destiné à la commande d'un système de démarrage-arrêt pour un véhicule doté d'une boîte de vitesse manuelle et dispositif correspondant

(30) Priorität: 11.10.2007 DE 102007048714
(43) Veröffentlichungstag der Anmeldung: 15.04.2009
(73) Patentinhaber: Schaeffler Technologies AG & Co. KG, 91074 Herzogenaurach (DE)
(72) Erfinder: Berger, Reinhard, Dr., 77815 Bühl (DE); Küpper, Klaus, Dr., 8010 Graz (AT); Welter, Klaus, 50858 Köln (DE)

(56) Entgegenhaltungen:
- WO-A1-2005/110794
- DE-A1- 10 251 765
- DE-A1- 10 307 377
- DE-A1-102006 028 333
- DE-A1-102006 028 336
- FR-A1- 2 875 557

## Beschreibung

Die Erfindung betrifft ein Verfahren mit den Merkmalen gemäß dem Oberbegriff des Anspruchs 1 sowie eine Vorrichtung zur Durchführung des Verfahrens.

Start-Stopp-Systeme für Handschaltgetriebe sind bekannt. Eine Abschaltung der Brennkraftmaschine und ein anschließender Wiederstart zur Einsparung von Energie während längerer Haltezeiten des Fahrzeuges zum Beispiel an Ampeln erfolgt dabei abhängig von verschiedenen Bedingungen. In der DE 33 43 018 A1 ist die Abschaltbedingung neben andern Bedingungen von einer Neutralstellung des Getriebes abhängig, das heißt, die Brennkraftmaschine wird nur abgestellt, wenn ein zuvor eingelegter Gang ausgelegt wurde. Die DE 103 07 377 A1 offenbart ein Start-Stopp-Verfahren, wonach die Inbetriebnahme der Brennkraftmaschine unterbrochen wird wenn die Einrückgeschwindigkeit eines Kupplungsausrückers eine vorgegebene Geschwindigkeit überschreitet. Die DE 10 2006 028 333 A1 offenbart ein Start-Stopp-System, welches eine Außerbetriebnahme der Brennkraftmaschine auch bei betätigtem Kupplungspedal vorsieht.

Abhängig von der Standzeit des Fahrzeugs und von den Gewohnheiten des Fahrers kann es vorkommen, dass während eines Halts des Fahrzeugs ein eingelegter Gang nicht ausgelegt und daher ein Energiespareffekt durch Stillsetzen der Brennkraftmaschine bei diesem Abschaltkriterium nicht genutzt werden kann.

Aufgabe der Erfindung ist daher, ein Verfahren und eine hierzu anwendbare Vorrichtung vorzuschlagen, die eine von der Gangstellung des Fahrzeugs unabhängige Stillsetzung der Brennkraftmaschine während eines Halts ermöglichen. Dabei sollen insbesondere Sicherheitsaspekte für einen sicheren Betrieb ohne beabsichtigtes Anfahren des Fahrzeugs während des Stillsetzens oder Wiederstarts der Brennkraftmaschine beachtet werden.

Diese Aufgabe wird durch ein Verfahren mit den Merkmalen gemäß Anspruch 1 sowie durch eine Vorrichtung mit den Merkmalen gemäß Anspruch 5 gelöst.

Die Aufgabe wird also durch ein Verfahren zur Steuerung eines Start-Stopp-Systems für ein von einem Fahrer betriebenes und mittels eines Betriebsschalters in Betrieb zu setzendes Fahrzeug mit Handschaltgetriebe mit einer zwischen einer Brennkraftmaschine und dem Handschaltgetriebe angeordneten, mittels eines Kupplungspedals betätigten Kupplung, wobei ein Stillsetzen der Brennkraftmaschine erfolgt, wenn ein die Betätigung des Kupplungspedals repräsentierendes erstes Signal vorliegt und zumindest eine weitere Bedingung für das Stillsetzen der Brennkraftmaschine erfüllt ist, und ein Wiederstart der Brennkraftmaschine erfolgt, wenn das die Betätigung des Kupplungspedals repräsentierende erste Signal vorliegt und zumindest eine weitere Bedingung für den Wiederstart erfüllt ist, gelöst, wobei eine weitere Bedingung für das Abstellen und den Wiederstart ein zweites Signal ist, das in Verbindung mit dem ersten Signal den tatsächlichen Kupplungszustand wiedergibt.

Weiterhin wird die Aufgabe durch eine Vorrichtung zur Durchführung des erfindungsgemäßen Verfahrens für ein von einem Fahrer betriebenes und mittels eines Betriebsschalters in Betrieb zu setzendes Fahrzeug mit Handschaltgetriebe mit einer zwischen einer Brennkraftmaschine und einem Handschaltgetriebe angeordneten, mittels eines Kupplungspedals betätigten Kupplung und das Kupplungspedal einen Geberzylinder betätigt, gelöst, wobei der Geberzylinder den bei einer Betätigung des Geberzylinders entstehenden Druck über eine Druckleitung auf einen die Kupplung betätigenden Nehmerzylinder überträgt und am Kupplungspedal, an einem Übertragungsweg zwischen Kupplungspedal und Geberzylinder oder am Geberzylinder ein erster Signalgeber zum Erfassen des ersten Signals und am Nehmerzylinder ein zweiter Signalgeber zum Erfassen des zweiten Signals angeordnet ist. Signalgeber können beispielsweise Sensoren zur Erfassung des Weges, der beispielsweise in Form eines elektrischen Signals an ein Steuergerät übermittelt wird.

Neben den an sich bekannten Bedingungen vorliegender Signale für die Bremsbetätigung, einem ersten repräsentativen Signal für die Betätigung des Kupplungspedals, einem Geschwindigkeitssignal des Fahrzeugs und dergleichen, die einzeln oder kombiniert zur Stillsetzung der Brennkraftmaschine ausgewertet werden können, wird erfindungsgemäß ein zweites repräsentatives Signal ausgewertet, das einen Rückschluss darauf gibt, ob die Kupplung bei Vorliegen eines eine geöffnete Kupplung anzeigenden Kupplungspedalsignals auch tatsächlich geöffnet ist. Eine derartige Erfassung zweier auf den Kupplungszustand rückführbarer Signale ermöglicht zum einen die Erfüllung von an eine derartige sicherheitsrelevante Anwendung zu stellenden Sicherheitsanforderungen und zum anderen den Verzicht auf das Auslegen eines Gangs zur Stillsetzung der Brennkraftmaschine, da der Kupplungszustand sicher erfasst werden und damit ein von der Brennkraftmaschine initiiertes Rollen infolge einer Übertragung von Moment über die Kupplung sicher vermieden werden kann. Durch die Auswertung der beiden Signale ist weiterhin die Funktion beider die Signale erzeugenden und auf ein Steuergerät übertragenden Sensoreinheiten plausibilisierbar.

Als Sensoreinheit für das erste Signal kann ein Pedalwegsensor, ein Sensor an der Übertragungsstrecke zwischen dem Kupplungspedal und einem Geberzylinder eines hydrostatischen Kupplungsausrücksystems mit einem vom Kupplungspedal betätigten Geberzylinder und einem die Kupplung betätigenden Nehmerzylinder sowie einer beide Zylinder verbindenden Druckleitung angeordneter Sensor oder ein Sensor sein, der die Bewegung des Geberzylinderkolbens oder der diesen beaufschlagenden Kolbenstange sein. Das zweite Signal wird vorteilhafterweise mittels eines Sensors ermittelt, der den Weg des Kolbens des Nehmerzylinders oder den Kupplungsweg direkt erfasst. Als vorteilhaft hat es sich erwiesen, wenn die gewonnenen Signale über den tatsächlichen Zustand der Kupplung auf den Greifpunkt der Kupplung bezogen werden, da der Greifpunkt unmittelbar die beginnende Drehmomentübertragung über die Kupplung vermittelt.

Ergibt die Auswertung der beiden Signale einen unsicheren Kupplungszustand, weil beispielsweise einer der Sensoren oder dessen Zuleitung zum Steuergerät defekt ist oder die Toleranzbereiche von Kupplung, Ausrücksystem und/oder Sensoren überschritten sind, kann der Fahrer aufgefordert werden, vorgegebene Maßnahmen einzuleiten. Hierzu kann er optisch oder akustisch aufgefordert werden. Es können einzelne Maßnahmen oder mehrere aufeinander folgende Maßnahmen aus der nachfolgenden, nicht abschließenden Aufzählung angefordert werden: Kupplung erneut betätigen, den Betriebsschalter aus- und wieder einschalten, einen gegebenenfalls eingelegten Gang auslegen. Unter Betriebsschalter kann ein Zündschalter, ein Zündschlüsselschalter oder dergleichen verstanden werden.

Es hat sich gezeigt, dass die gewonnenen Signale infolge von Toleranzen und Langzeiteffekten wie Verschleiß und Alterung der Kupplung, im Ausrücksystem und/oder bei der Erfassung der Signale unter Umständen von einem Wert, der eine ein- oder ausgerückte Kupplung anzeigt, abweichen. Bei Auswertung des zumindest einen den Kupplungszustand betreffenden Signals kann ein für eine signifikante Zuordnung, beispielsweise des Kupplungszustands "Kupplung offen" beziehungsweise "Kupplung geschlossen", "Greifpunkt erreicht" und dergleichen ein Toleranzband hinterlegt werden. Als besonders vorteilhaft hat sich gezeigt, wenn dabei zuerst das erste Signal überprüft wird, ob es in einem vorgegebenen Toleranzbereich liegt, der einen offenen Zustand oder einen Greifpunkt der Kupplung anzeigt und abhängig von der Erfüllung dieses Kriteriums das zweite Signal überprüft wird, ob es eine vorgegebene Änderung des Signals, beispielsweise eine vorgegebene Wegänderung erfahren hat, ungeachtet derer Absolutwerte. Auf diese Weise kann beispielsweise ein von der Temperatur verursachtes starkes Schwanken des Greifpunktes in einem hydraulischen Kupplungsausrücksystem kompensiert werden. Die Vorgaben der Werte für die Toleranzbereiche der beiden Signale können dabei fest vorgegebene oder aus der Betriebshistorie des Fahrzeugs gelernte oder adaptierte Größen sein. Beispielsweise können diese Größen aus im Fahrzeug vorhandenen Routinen für die Greifpunktadaption sein, wie sie beispielsweise in automatisierten Kupplungen zum Einsatz kommen, indem beispielsweise abhängig vom zurückgelegten Kupplungsweg der Greifpunkt regelmäßig nach signifikanten Ereignissen, nach dem Start, vor dem Stillsetzen der Brennkraftmaschinen und/oder in ähnlichen Situationen aus dem Schlupfverhalten der Kupplung bei vorgegebenem Motormoment und/oder aus dem Verhalten der Brennkraftmaschine bei sich änderndem über die Kupplung übertragenem Moment bestimmt und gegebenenfalls gelernt oder adaptiert wird.

Weiterhin kann in vorteilhafter Weise vorgesehen sein, die Änderung des zweiten Signals bei geöffneter Kupplung um einen vorgegebenen Korrekturwert zuzulassen. Auf diese Weise kann bei signifikant offener Kupplung einer Fehlermeldung, die Kupplung sei nicht offen, wenn beispielsweise kleine Änderungen des zweiten Signals auftreten, vorgebeugt werden, die lediglich auf dynamische, kleine Änderungen des hydraulischen Ausrücksystems abhängig von Temperatureffekten, beispielsweise wegen unterschiedlicher Temperaturkoeffizienten von Leitungen und Druckflüssigkeit zurück geführt werden können.

Es versteht sich, dass die zuvor beschriebenen Voraussetzungen auch für den Wiederstart der Brennkraftmaschine anwendbar sind.

Die Erfindung wird anhand der Figuren 1 bis 5 näher erläutert. Dabei zeigen:
Figur 1 ein Blockschaltbild eines Ausführungsbeispiels eines Start-Stopp-Systems,
Figur 2 ein Ausführungsbeispiel eines Kupplungsausrücksystems mit Signalgebern,
Figur 3 ein Blockschaltbild zur Darstellung der Start-Stopp-Bedingungen,
Figur 4 ein Diagramm zur Darstellung von Signalzusammenhängen
   und
Figur 5 ein weiteres Blockschaltbild mit alternativen Start-Stopp-Bedingungen.

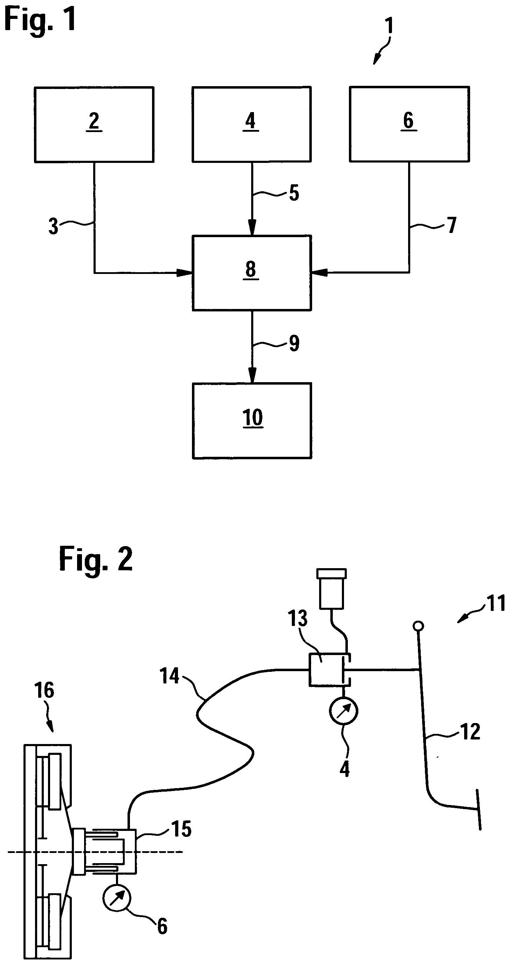

In Figur 1 ist der Funktionszusammenhang eines Start-Stopp-Systems 1 anhand eines Blockschaltbilds näher erläutert. Die Signalgeber 2, 4, 6 übermitteln jeweils für die Stillsetzung der Brennkraftmaschine 10 relevante und repräsentative Signale über entsprechende Signalleitungen 3, 5, 7 an ein Steuergerät 8, das die Signale verarbeitet und übermittelt bei für eine Stillsetzung der Brennkraftmaschine vorgegebenen Bedingungen über die Signalleitung 9 ein Steuersignal zur Stillsetzung der Brennkraftmaschine 10 an diese und bei Vorliegen von Bedingungen zum Wiederstart entsprechende Startsignale. Die Signalleitungen 3, 5, 7, 9 können eine analoge oder digitale Übertragungsweise erlauben. Die Signalübertragung kann alternativ oder zusätzlich über einen Übertragungsbus, beispielsweise CAN-Bus erfolgen. Die Signalgeber 2, 4, 6 können Sensoren wie Wegsensoren, Geschwindigkeitssensoren, Temperatursensoren, Drehzahlsensoren und dergleichen sein, die Rohsignale oder standardisierte Signale an das Steuergerät 8 übermitteln. Einer oder mehrere Signalgeber können auch ein Steuergerät sein, dem weitere Signalgeber Signale übermitteln und die von dem Steuergerät unverarbeitet oder überarbeitet auf eine Signalleitung oder einen Übertragungsbus übermittelt werden. Beispielsweise kann ein ABS-Steuergerät Raddrehzahlen und/oder ein Bremssteuergerät einen unverarbeiteten Bremsdruck oder verarbeitete Signale wie beispielsweise die Information "Fahrzeug steht" übermitteln. Das Steuergerät 8 kann ein in sich abgeschlossenes Steuergerät darstellen oder in ein weiteres Steuergerät integriert sein, beispielsweise in das Motorsteuergerät. Steuersignale für die Stillsetzung der Brennkraftmaschine können beispielsweise das Schließen der Drosselklappe, das Abstellen der Einspritzpumpe und/oder das Unterbrechen der Zündung sein, ein Wiederstart kann durch Einschalten der Zündung, das Starten des Anlassers und die Wiederaufnahme der Einspritzung sein.

Die Stillsetzung der Brennkraftmaschine 10 erfolgt nach bestimmten Kriterien, die festlegen, ob eine Stillsetzung erfolgen kann, weil die Bedingungen für eine Stillsetzung erfüllt sind. So sollte ein Fahrzeug stehen und ein nur vorübergehender Stillstand erkannt werden. Weiterhin kommen Bedingungen hinzu, die erfüllt sein müssen, damit ein Stillstand unter Sicherheitsaspekten durchführbar ist. Ein Fahrzeug darf nicht rollen, das heißt, die Fuß- oder Feststellbremse muss zumindest auf einer Gefällstrecke betätigt sein. Entsprechende Signale und deren Auswertung sind in dem Blockschaubild zusammenfassend unter dem Signalgeber 2 und der Signalleitung 3 zusammengefasst. Selbstverständlich können zu diesem Zweck mehrere Signalgeber und entsprechende Signalleitungen vorgesehen werden.

Weiterhin ist sicherzustellen, dass ein Fahrzeug beim Stillsetzen nicht weiterfährt beziehungsweise beim Wiederstart nicht ungewollt anfährt. Um unabhängig von dem Schaltzustand des Getriebes zu sein und auch ein Stillsetzen der Brennkraftmaschine bei eingelegtem Gang zulassen zu können, wird die Kupplungsfunktion so überwacht, dass ein sicherer Zustand einer ausgerückten Kupplung erfasst und die Funktion der Überwachung sicher überwacht werden kann. Hierzu wird mittels des Signalgebers 4 die Betätigung der Kupplung erfasst und über die Signalleitung 5 an das Steuergerät 8 übertragen. Zusätzlich wird mittels eines weiteren Signalgebers 6 der tatsächliche Kupplungszustand erfasst und über die Signalleitung 7 auf das Steuergerät 8 übertragen. Auf diese Weise können die Signalgeber 4, 6 gegenseitig auf Funktion überwacht und der Kupplungszustand sicher erfasst werden.

Figur 2 zeigt ein für das Start-Stopp-System 1 der Figur 1 entsprechend vorbereitetes Ausführungsbeispiel eines Ausrücksystems 11 mit einem von einem Fahrer mittels eines Kupplungspedals 12 betätigten Geberzylinder 13, wobei der durch den Geberzylinder erzeugte Druck über die Druckleitung 14 auf den Nehmerzylinder 15 übertragen wird, der die Kupplung 16 abhängig vom anliegenden Druck betätigt. Die Signalgeber 4, 6 sind in dem gezeigten Ausführungsbeispiel als Wegsensoren ausgebildet, die jeweils den zurückgelegten Weg im Geberzylinder 13 und im Nehmerzylinder 15 wiedergeben.

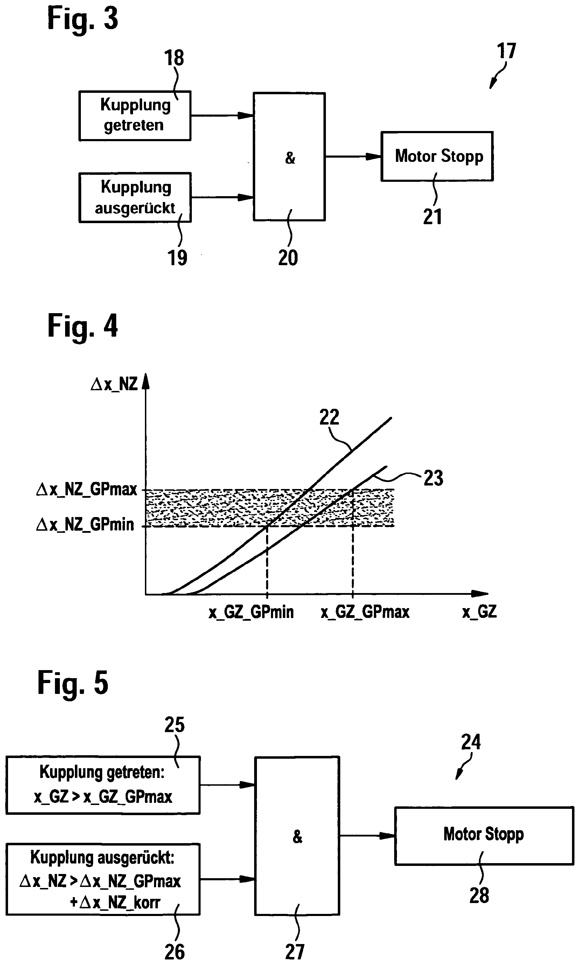

Figur 3 zeigt hierzu ein vereinfachtes Blockschaltbild mit einer Logikschaltung 17, in dem bereits im Steuergerät 8 (Figur 1) verarbeitete Signale des Signalgebers 4 verarbeitet wurden und aufgrund dieser Signale in Block 18 eine Entscheidung gefällt wird, dass der Fahrer das Kupplungspedal 12 (Figur 2) betätigt hat. In Block 19 wurde aufgrund von Plausibilitätsbeurteilung eine Entscheidung getroffen, dass die Kupplung ausgerückt wurde. Beide Entscheidungen werden in Block 20 mit "und" verknüpft, so dass bei Vorliegen beider Entscheidungen in Block 21 - selbstverständlich unter der Voraussetzung, dass weitere gewählte Stillsetzungsparameter wie "Bremse betätigt" oder "Geschwindigkeit Null" oder dergleichen ebenfalls erfüllt sind - sie Brennkraftmaschine stillgesetzt wird und unter den selben Bedingungen auf Fahrerwunsch, beispielsweise durch Betätigung des Fahrpedals wieder gestartet wird.

Figur 4 zeigt die Festlegung der Bedingungen zur Gewinnung der in Figur 3 gewonnen Entscheidungen der Blöcke 18, 19. Bei idealen Verhältnissen sind die beiden Wegsignale unter Berücksichtigung des Druckflächenverhältnisses der beiden Kolben von Geber- und Nehmerzylinder proportional. Durch Elastizitäten des in Figur 2 gezeigten Ausrücksystems 11 und in der Kupplung 16 sowie von der Temperatur und von den Steifigkeitseigenschaften der Druckleitung 14, dem Geberzylinder 13 und dem Nehmerzylinder 15 abhängigen Einflüssen ist diese Zuordnung nicht mehr eindeutig und es werden Toleranzbereiche vorgegeben, bei denen die Kupplung 16 sicher geöffnet ist, beispielsweise indem für einen Greifpunkt der Kupplung 16, an dem gerade kein Moment mehr über die Kupplung 16 übertragen wird, entsprechende Toleranzbereiche vorgegeben werden.

In dem Diagramm der Figur 4 werden zwei Kurven 22, 23, die jeweils eine Toleranzgrenze des Wegeverhaltens eines Nehmerzylinders beim zurückgelegten Weg x_GZ durch den Geberzylinder darstellen, gezeigt. Die beiden Kurven 22, 23 unterscheiden sich in ihrer Steigung, im Ansprechweg und im Achsenabschnitt, wobei durch die Darstellung der Änderung Δx_NZ des Nehmerzylinders beide Achsenabschnitte der Kurven 22, 23 auf Null bezogen werden. Durch Verwendung der Änderungen Δx_NZ kann die Streuung des Nullpunktes des Weges des Nehmerzylinders eliminiert werden, da in Abhängigkeit vom zurückgelegten Weg x_GZ nur die Änderung des Weges des Nehmerzylinders erfasst wird. Dementsprechend kann für einen zu erfassenden Greifpunkt als tatsächlichem Kupplungszustand bei einer vorgegebenen Toleranz des Geberzylinders zwischen den Werten x_GZ_GPamax und x_GZ_GPmin ein engerer Toleranzbereich einer Wegänderung in dem Toleranzbereich zwischen den Wegänderungen Δx_NZ_GPmax und Δx_NZ_GPmin für den Nehmerzylinder gesteckt werden.

Dementsprechend kann in Figur 5 eine weiter verbesserte Logikschaltung 24 vorgeschlagen werden, bei der in Block 25 entschieden wird, ob die Kupplung getreten wurde, wenn der am Geberzylinder zurückgelegte Weg x_GZ größer als die maximale Toleranz für das Erreichen des Greifpunkts x_GZ_GPmax überschritten wird. In Block 26 wird entschieden, ob die Kupplung tatsächlich ausgerückt wurde, wenn eine für den Weg des Signalgebers 6 (Figur 2) einstellende Wegänderung Δx_NZ größer als eine bei maximaler Toleranz für das Erreichen des Greifpunkts am Geberzylinder x_GZ_GPmax vorgegebene Wegänderung Δx_NZ_GPmax ist. Zusätzlich kann in Block 26 eine Wegänderung Δx_NZ_korr vorgesehen werden, die bei offener Kupplung den Toleranzbereich erweitert, um bei sich beispielsweise in Abhängigkeit von der Temperatur ändernden Wegen am Nehmerzylinder eine robuste Anzeige der offenen Kupplung zu erzielen. Sind beide Entscheidungen in den Blöcken 25, 26 gefällt, werden die Entscheidungen in Block 27 mit "und" verknüpft. Liegt die Bedingung in Block 27 vor wird in Block 28 die Brennkraftmaschine stillgesetzt (weitere Bedingungen siehe unter Figur 3) oder nach Vorliegen dieser Bedingungen und der vorgegebenen Startbedingungen erneut gestartet.

**Bezugszeichenliste**

| | | | |
|---|---|---|---|
| 1 | Start-Stopp-System | 15 | Nehmerzylinder |
| 2 | Signalgeber | 16 | Kupplung |
| 3 | Signalleitung | 17 | Logikschaltung |
| 4 | Signalgeber | 18 | Block |
| 5 | Signalleitung | 19 | Block |
| 6 | Signalgeber | 20 | Block |
| 7 | Signalleitung | 21 | Block |
| 8 | Steuergerät | 22 | Kurve |
| 9 | Signalleitung | 23 | Kurve |
| 10 | Brennkraftmaschine | 24 | Logikschaltung |
| 11 | Ausrücksystem | 25 | Block |
| 12 | Kupplungspedal | 26 | Block |
| 13 | Geberzylinder | 27 | Block |
| 14 | Druckleitung | 28 | Block |

## Patentansprüche

1. Verfahren zur Steuerung eines Start-Stopp-Systems (1) für ein von einem Fahrer betriebenes und mittels eines Betriebsschalters in Betrieb zu setzendes Fahrzeug mit Handschaltgetriebe mit einer zwischen einer Brennkraftmaschine (10) und dem Handschaltgetriebe angeordneten, mittels eines Kupplungspedals (12) betätigten Kupplung (16), wobei ein Stillsetzen der Brennkraftmaschine (10) erfolgt, wenn ein die Betätigung des Kupplungspedals (12) repräsentierendes erstes Signal vorliegt und zumindest eine weitere Bedingung für das Stillsetzen der Brennkraftmaschine erfüllt ist, und ein Wiederstart der Brennkraftmaschine (10) erfolgt, wenn das die Betätigung des Kupplungspedals (12) repräsentierende erste Signal vorliegt und zumindest eine weitere Bedingung für den Wiederstart erfüllt ist, wobei eine weitere Bedingung für das Abstellen und den Wiederstart ein zweites Signal ist, das in Verbindung mit dem ersten Signal einen tatsächlichen Kupplungszustand wiedergibt, wobei das Vorliegen zumindest eines Signals davon abhängig gemacht wird, ob das Signal in einem vorgegebenen Toleranzband liegt, **dadurch gekennzeichnet, dass** bei Vorliegen des ersten in einem vorgegebenen Toleranzband liegenden Signals und bei Änderungen des zweiten Signals um einen vorgebbaren Toleranzbereich der Kupplungszustand offen angezeigt wird, wobei während der Ermittlung der Änderung bei offener Kupplung ein zusätzlicher vorgebbarer Korrekturwert für die Änderung zugelassen wird.

2. Verfahren nach Anspruch 1, **dadurch gekennzeichnet, dass** der, tatsächliche Kupplungszustand ein Greifpunkt der Kupplung (16) ist.

3. Verfahren nach Anspruch 1 oder 2, **dadurch gekennzeichnet, dass** wenn eine Auswertung der beiden Signale einen unsicheren Kupplungszustand ergibt, bei unsicherem Kupplungszustand während des Wiederstarts der Fahrer aufgefordert wird, zumindest eine der nachfolgenden Maßnahmen einzeln oder zu mehreren kumuliert in einer angegebenen Reihenfolge durchzuführen: Kupplung erneut betätigen, den Betriebsschalter aus- und wieder einschalten, einen gegebenenfalls eingelegten Gang auslegen.

4. Verfahren nach Anspruch 3, **dadurch gekennzeichnet, dass** die Maßnahmen durch akustische und/oder optische Aufforderungen angefordert werden.

5. Vorrichtung zur Durchführung des Verfahrens gemäß der Ansprüche 1 bis 7 für ein von einem Fahrer betriebenes und mittels eines Betriebsschalters in Betrieb zu setzendes Fahrzeug mit Handschaltgetriebe mit einer zwischen einer Brennkraftmaschine und einem Handschaltgetriebe angeordneten, mittels eines Kupplungspedals (12) betätigten Kupplung (16) und das Kupplungspedal (12) einen Geberzylinder (13) betätigt, der über eine Druckleitung (14) den bei einer Betätigung des Geberzylinders (13) entstehenden Druck auf einen die Kupplung (16) betätigenden Nehmerzylinder (15) überträgt, wobei am Kupplungspedal (16), an einem Übertragungsweg zwischen Kupplungspedal (12) und Geberzylinder (13) oder am Geberzylinder (13) ein erster Signalgeber (4) zum Erfassen des ersten Signals und am Nehmerzylinder (15) ein zweiter Signalgeber (6) zum Erfassen des zweiten Signals angeordnet ist.

## Claims

1. Method for controlling a start-stop system (1) for a vehicle which is operated by a driver, is to be put into operation by means of an operating switch and has a manual gearbox with a clutch (16) which is arranged between an internal combustion engine (10) and the manual gearbox and is activated by means of a clutch pedal (12), wherein the internal combustion engine (10) is deactivated if a first signal which represents the activation of the clutch pedal (12) is present, and at least one further condition for the deactivation of the internal combustion engine is satisfied, and the internal combustion engine (10) is restarted if the first signal which represents the activation of the clutch pedal (12) is present and at least one further condition for the restarting is satisfied, wherein a further condition for the shutting down and the restarting is a second signal which represents an actual clutch state in conjunction with the first signal, wherein the presence of at least one signal is made dependent on whether the signal is in a predefined tolerance band, **characterized in that** when the first signal which is in a predefined tolerance band is present and when changes occur in the second signal about a predefinable tolerance range the clutch state is indicated as open, wherein, during the determination of the change, an additional predefinable correction value for the change is permitted in the case of an open clutch.

2. Method according to Claim 1, **characterized in that** the actual clutch state is a bite point of the clutch (16).

3. Method according to Claim 1 or 2, **characterized in that** if an evaluation of the two signals reveals an unsafe clutch state, the driver is requested in the case of an unsafe clutch state during the restarting to carry out at least one of the following measures individually or to carry out several thereof in accumulated fashion in a specified sequence: activate the clutch again, switch the operating switch off and on again, disengage a possibly engaged gear speed.

4. Method according to Claim 3, **characterized in that** the measures are requested by audible and/or visual requests.

5. Device for carrying out the method according to one of Claims 1 to 7 for a vehicle which is operated by a driver, is to be put into operation by means of an operating switch and has a manual gearbox with a clutch (16) which is arranged between an internal combustion engine and a manual gearbox and is activated by means of a clutch pedal (12), and the clutch pedal (12) activates a master cylinder (13) which transmits, via a pressure line (14), the pressure occurring in the case of activation of the master cylinder (13) to a slave cylinder (15) which activates the clutch (16), wherein a first signal transmitter (4) for picking up the first signal is arranged on the clutch pedal (16), on a transmission path between the clutch pedal (12) and the master cylinder (13) or on the master cylinder (13), and a second signal transmitter (6) for picking up the second signal is arranged on the slave cylinder (15).

## Revendications

1. Procédé destiné à la commande d'un système de démarrage-arrêt (1) pour un véhicule doté d'une boîte de vitesse manuelle, lequel est opéré par un conducteur et lequel doit être mis en service au moyen d'un commutateur de service, avec un embrayage (16) qui est actionné au moyen d'une pédale de débrayage (12) et est disposé entre un moteur à combustion interne (10) et la boîte de vitesse manuelle ;
dans lequel un arrêt du moteur à combustion interne (10) a lieu en présence d'un premier signal représentant l'actionnement de la pédale de débrayage (12) et lorsque tout au moins une autre condition pour l'arrêt du moteur à combustion interne est remplie ; et
dans lequel un redémarrage du moteur à combustion interne (10) a lieu en présence du premier signal représentant l'actionnement de la pédale de débrayage (12) et lorsque tout au moins une autre condition pour le redémarrage est remplie ;
dans lequel une autre condition pour l'arrêt et le redémarrage du moteur à combustion interne est un deuxième signal qui reproduit un état d'embrayage effectif en relation avec le premier signal ;
dans lequel la présence de tout au moins un signal est subordonnée à la condition que le signal se situe dans une bande de tolérance prédéfinie ;
**caractérisé en ce que** l'état de l'embrayage est affiché ouvertement en présence du premier signal se trouvant dans une bande de tolérance prédéfinie et en cas de variations du deuxième signal selon une plage de tolérance pouvant être prédéfinie ;
dans lequel une valeur de correction supplémentaire pouvant être prédéfinie est autorisée pour la variation pendant la détermination de la variation dans le cas d'un embrayage ouvert.

2. Procédé selon la revendication 1, **caractérisé en ce que** l'état de l'embrayage effectif est un point de prise de l'embrayage (16).

3. Procédé selon la revendication 1 ou 2, **caractérisé en ce que**, quand une évaluation des deux signaux donne lieu à un état de l'embrayage incertain, le conducteur est invité à prendre tout au moins l'une des mesures suivantes, en cas d'état de l'embrayage incertain pendant le redémarrage, une seule des mesures étant prise ou plusieurs de ces mesures étant prises une par une en suivant une séquence déterminée : actionner de nouveau l'embrayage, désactiver et réactiver le commutateur de service, débrayer une vitesse éventuellement engagée.

4. Procédé selon la revendication 3, **caractérisé en ce que** les mesures sont sollicitées par des demandes acoustiques et/ou optiques.

5. Dispositif destiné à la réalisation du procédé conformément aux revendications 1 à 7 pour un véhicule doté d'une boîte de vitesse manuelle, lequel est opéré par un conducteur et lequel doit être mis en service au moyen d'un commutateur de service, avec un embrayage (16) qui est actionné au moyen d'une pédale de débrayage (12) et est disposé entre un moteur à combustion interne et une boîte de vitesse manuelle ;
dans lequel la pédale de débrayage (12) actionne un maître cylindre d'embrayage (13), lequel transmet la pression générée lors d'un actionnement du maître cylindre d'embrayage (13) sur un cylindre récepteur (15) qui actionne l'embrayage (16), par l'intermédiaire d'une conduite sous pression (14) ;
dans lequel un premier générateur de signaux (4) destiné à la détection du premier signal est disposé au niveau de la pédale de débrayage (16), plus précisément au niveau d'une voie de transmission située entre la pédale de débrayage (12) et le maître cylindre d'embrayage (13), ou au niveau du maître cylindre d'embrayage (13) et un deuxième générateur de signaux (6) destiné à la détection du deuxième signal est disposé au niveau du cylindre récepteur (15).
